# EUROPEAN PATENT APPLICATION

(11) **EP 1 624 684 A2**
(43) Date of publication of application: **08.02.2006**
(21) Application number: 05107607.3
(22) Date of filing: 06.06.2001
(51) Int. Cl.: H04N 7/088

(54) **Method and apparatus for accessing an information service**

(30) Priority: 28.06.2000 GB 0015864
(62) Divisional of application: 01304957.2
(71) Applicant: Nokia Corporation, 02150 Espoo (FI)
(72) Inventor: Ivehammar, Stefan, S-58933 Linkoping (SE)
(74) Representative: Walaski, Jan Filip

(57) **Abstract**

A discreet teletext subtitle line is used to notify viewers that a teletext page exists with additional information relating to a television programme. Viewers have instant access to this teletext information by pressing a single key on a remote control. A digital television receiver accepts the single key press in response to the subtitle line and automatically switches to teletext mode and displays the relevant page, without the viewer needing to enter the page number on his remote control.

## Description

This invention relates to the provision of information services, particularly but not exclusively to a method of accessing a teletext service through a television system.

The provision of text based information services, for example teletext, for viewing on a conventional television receiver, is well-known. The BBC's Ceefax™ service and ITV's Teletext™ service are examples of commercial versions of teletext services. Teletext is a data format which enables data to be transmitted within a video signal. Commonly, teletext data is encoded in unused parts of the video signal, for example in the vertical blanking interval. Teletext data can also be transmitted over a dedicated channel, if this is available, for example in a cable or satellite television system.

In a conventional television system having a teletext facility, a viewer switches between the television and teletext modes using, for example, a 'TEXT' button on a remote control unit. In the teletext mode, a viewer selects a page that he wishes to view by entering the page number on the remote control unit. Page numbers are defined in the teletext standard as a 3-digit number in the range 100 to 899, consisting of one 'magazine' digit plus two page number digits.

Increasingly, television viewers are demanding, and service or programme providers seeking to provide, additional information relating to television programmes currently being broadcast. For example, television viewers can retrieve scores, detailed results and other facts when watching sports programmes. Cooking programmes often display a page number which sets out the recipes which have been used in the programme. At present, a service provider notifies viewers that there is a teletext page with more information available, by incorporating suitable text in the standard video signal, for example, "See Teletext Page 580". In response, the viewer presses the TEXT button on his remote control unit to enter teletext mode, and enters the previously displayed three digit page number using the numeric key pad on the remote control unit. This can be inconvenient, since the viewer may forget the page number after switching to the teletext mode, or may enter an incorrect number or even be unable to enter the number easily, for example if he is watching the television programme in low light conditions. Furthermore, the viewer can also have difficulties in reading the number on the screen for the relatively brief time that it appears. Finally, and not to be underestimated, is the general propensity of television viewers to take the option that requires least effort. Faced with the option of entering four keystrokes on their remote control unit, or continuing to watch the programme, many viewers will simply ignore the additional information available to them.

WO 98/17064 describes an interactive television system in which a URL representing an Internet website is encoded in a television signal. A user may link to the website by selecting an icon displayed on their television screen.

EP 0,757,485 describes an interactive television system including a teletext multiplex broadcasting transmission device. A household interactive television receiver generates an additional information selecting screen for selecting arbitrary additional information according to a request signal received from a television remote controller.

The present invention aims to provide viewers with easier access to additional information.

According to the present invention, there is provided apparatus for accessing an information service from a television programme service according to claim 1.

By using an acceptance signal which is independent of the page to which the link information corresponds, and therefore breaking the one-to-one correspondence between the keystrokes entered on the display controller and the digits of a page identifier which identifies a page, the process of selecting a page of the information service can be made considerably simpler and more reliable. In the case of a teletext service using three digit page identifiers, the process of selecting a page can be reduced by three keystrokes, from the four keystrokes required in a conventional system to change to teletext mode from TV viewing mode and then to enter a three digit number, to the single keystroke required in accordance with the invention to accept a direct transfer to the page identified on the television screen.

Preferably, the link information is provided in a subtitle line.

The apparatus can include means for highlighting the link information, so that the availability of the information in a readily accessible way is drawn to the viewer's attention.

The apparatus can further comprise means for distinguishing link information from information which does not comprise a link to the information service. Preferably, this comprises means for detecting a tag associated with the link information. On detection, the link information can be displayed irrespective of the preferences set by the viewer, so that a viewer does not have to manually set the text viewing mode to obtain the benefit of the invention.

According to the invention, there is further provided a method of accessing an information service from a television programme service via a television receiver according to claim 15.

According to the invention, there is also provided a program to be executed by a processor to enable access to an information service from a television programme service according to claim 27.

Embodiments of the invention will now be described by way of example with reference to the accompanying drawings, in which:
Figure 1 is a schematic diagram of a digital television system;
Figure 2 is a schematic diagram of the digital television receiver which forms part of the digital television system shown in Figure 1;
Figure 3 is a schematic diagram of the software running in the digital television receiver shown in Figure 2;
Figure 4 is a schematic flow chart illustrating the operation of the invention; and
Figure 5 is a schematic flow chart illustrating the operation of the invention with tagged page numbers.

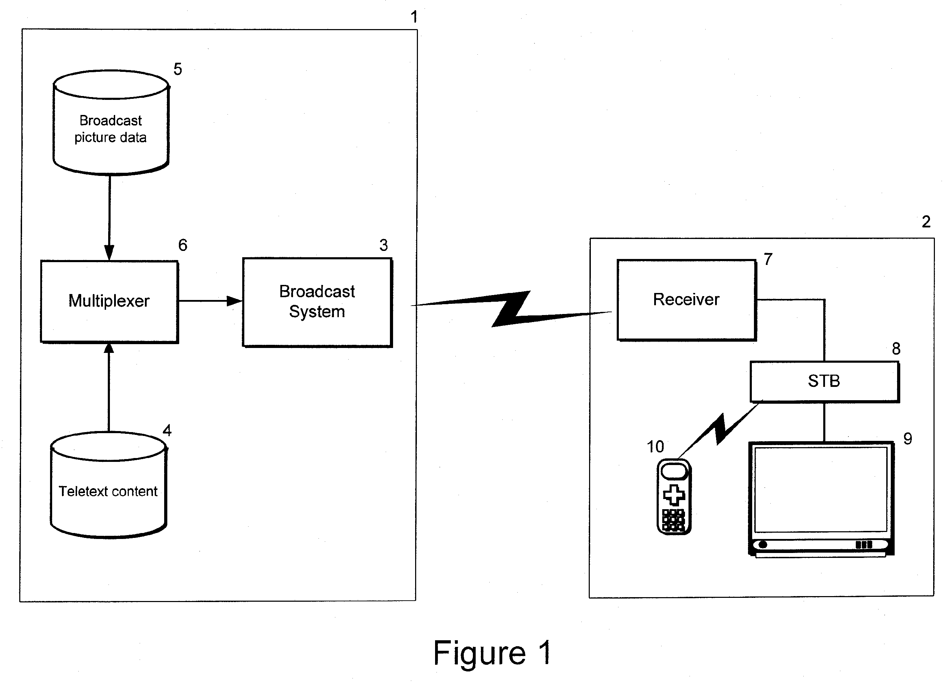

Referring to Figure 1, a digital television system with a teletext capability, for example teletext which conforms to the ITU-R System B Teletext format, also known as EBU Teletext, comprises a digital broadcast station 1 operating according to the Digital Video Broadcasting (DVB) standard and a DVB-compliant digital television receiver 2.

The broadcast station 1 provides a combined television/teletext signal, conveyed for example as MPEG-2 transport stream packets in accordance with current DVB standards, from a broadcast system 3, which is for example a terrestrial transmitter, a cable TV head-end or a satellite broadcast system. The combined signal is produced by multiplexing fixed format teletext content 4 with broadcast picture data 5 at a multiplexer 6.

The digital television receiver 2 includes a receiver 7 and a set top box (STB) 8 coupled to a television set 9. The receiver 7 can be, for example, an aerial, cable receiver or satellite dish, together with the associated electronics for receiving a television signal. The functionality provided by the set top box 8 and/or the receiver electronics can alternatively be integrated into the television set 9. The digital television receiver 2 is controlled by a remote control unit 10, also referred to herein as a display controller. The digital television receiver 2 can alternatively be any apparatus capable of receiving a television/teletext signal, for example a personal computer having a TV display card and teletext decoder.

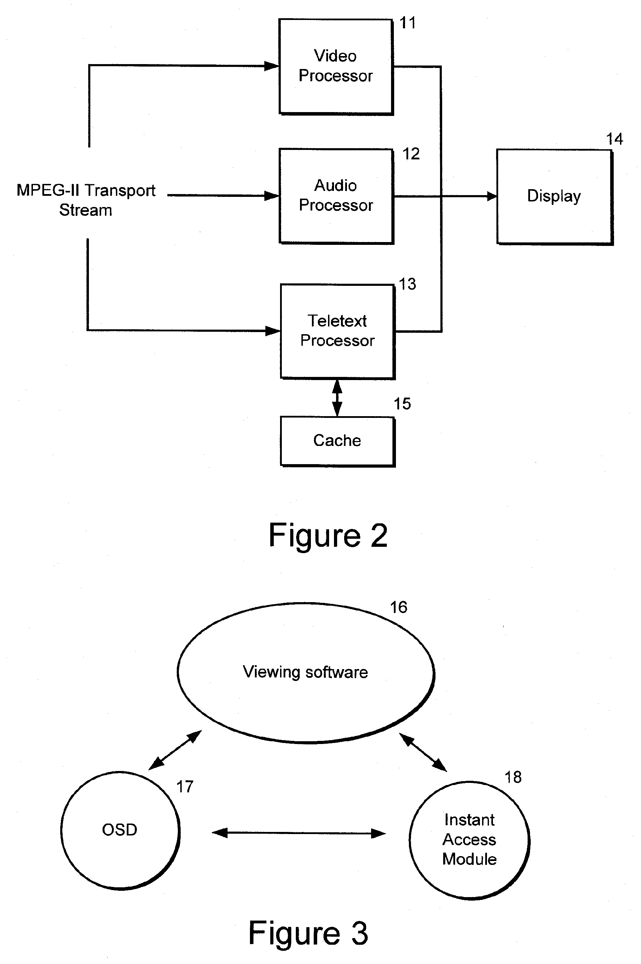

Referring to Figure 2, the set top box 8 comprises a video stream processor 11 for processing the MPEG-II transport stream from the receiver 7, an audio stream processor 12, a teletext stream processor 13 for processing the teletext packets and a display 14, for example a conventional CRT display forming part of the television 9, for displaying television images and teletext data. Cache memory 15 is provided to enable local storage of teletext pages for subsequent rapid retrieval.

Referring to Figure 3, the video stream processor 11 and teletext stream processor 13 modules are implemented in software by television viewing software 16, for example as found in a conventional DVB-compliant digital television receiver and teletext decoding and display software, referred to herein as On Screen Display (OSD) software 17, which is also found in conventional DVB-compliant digital television receivers having a teletext decoding capability.

The OSD software 17 is responsible for decoding streams of teletext packets and controlling the display of the resulting teletext pages on the display 14. For example, a user selects page number 555 on the remote control unit 10 by pressing a 'TEXT' button to enter teletext mode and then typing in the character '5' three times. This selection is received at the STB 8. In response, the OSD software 17 extracts text and graphic information corresponding to page 555 from the video stream and displays it on the display 14. If a teletext subtitle page is selected, for example page 888 in the United Kingdom, the OSD software 17 extracts the subtitle stream from the video signal and overlays it onto the video picture.

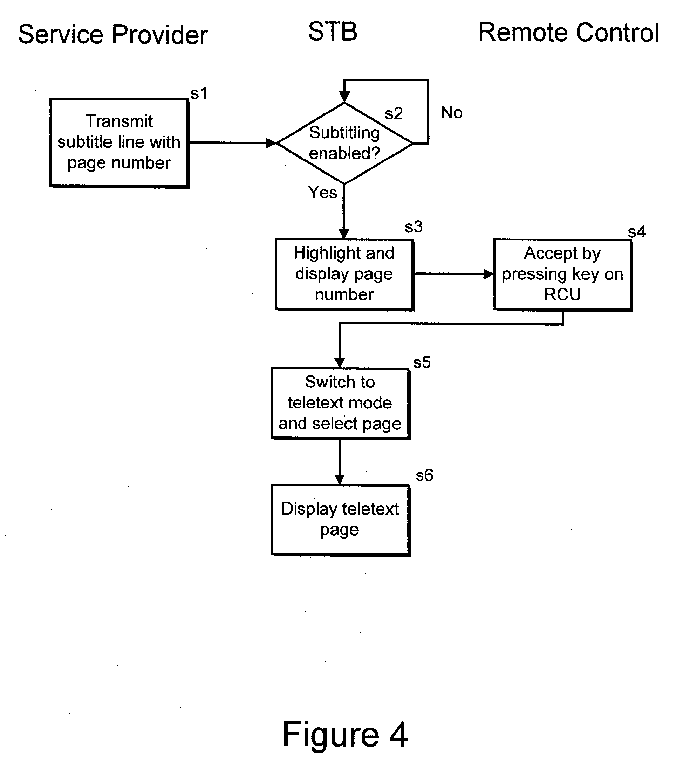

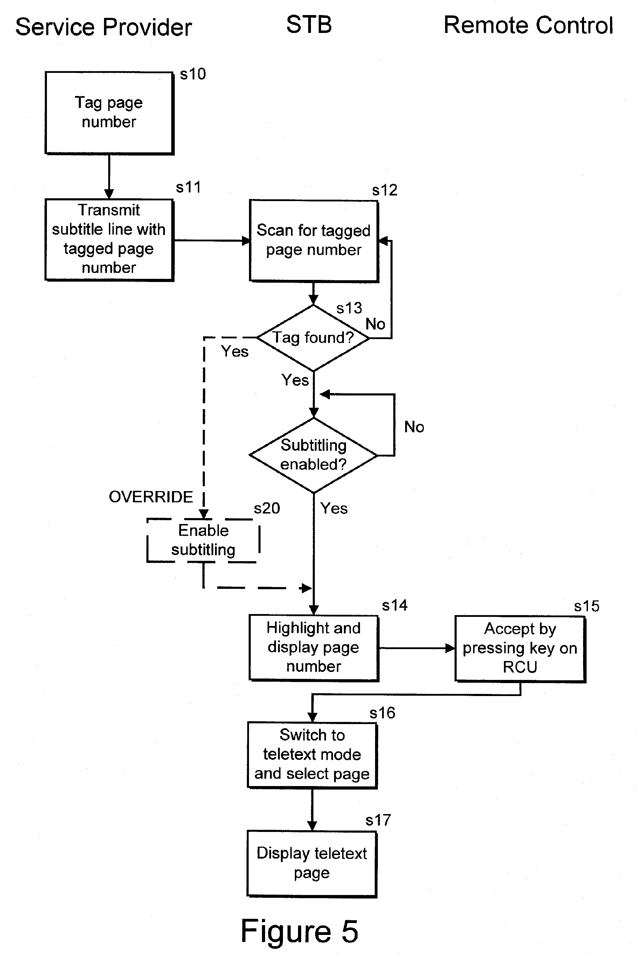

In accordance with the invention, an additional software module is provided, referred to herein as the instant access module 18, to run alongside the viewing software 16 and the OSD software 17 and to implement the functionality described below with reference to Figures 4 and 5.

Referring to Figure 4, when a service provider wishes to notify television viewers that there is additional information relating to the current television programme available on a certain teletext page, for example page number 345, the service provider transmits a teletext subtitle line to this effect, for example "Top scores on Teletext page 345" (step s1). The teletext subtitle line is transmitted on a teletext subtitle page which is associated with a language code, for example, ENG for English, in the teletext descriptor in the digital video broadcasting service information system known as DVB-SI. A subtitle page in this form is automatically displayed by a conventional DVB-compliant digital television receiver with OSD software, as long as the viewer has enabled teletext subtitling and selected the correct subtitling language (step s2).

To ensure that a viewer's attention is drawn to the additional available information, the instant access module 18 highlights the page number in the subtitle line, for example by causing the page number to flash or by displaying it in a different colour (step s3). In response to the display of the subtitle line containing the highlighted number, the viewer presses a selected key on the remote control unit (RCU) 10, for example an 'OK' key or the 'TEXT' key (step s4). On receiving this key, the instant access software 18 switches the viewing mode to teletext mode and selects the highlighted page number (step s5). The OSD software 17 then displays the selected page (step s6).

Referring to Figure 5, the instant access software 18 can be configured to differentiate subtitle lines containing page number references from ordinary subtitle lines which incidentally contain three digit numbers, by agreeing a coding scheme with the service provider. For example, the page number is tagged by the service provider prefixing it with a tag combination which would not normally be used (step s10). For example, a combination of [Flash] and [Steady] tags is used, where the [Flash] tag causes the text after it to flash and the [Steady] tag switches off the flash, in the format: [Flash] [Steady]Page Number. The subtitle line with tagged page number is transmitted to the receiver 7 (step s11). The instant access software 18 scans through all incoming subtitle lines (step s12) looking for the [Flash] [Steady] tag combination. If found, then assuming that teletext subtitling is enabled (step s13), the page number following the tag combination is highlighted and displayed as available for the viewer to accept (step s14). As described in relation to Figure 4, the viewer can accept the offer to view the page corresponding to the displayed page number by pressing a single key on his remote control unit, which triggers display of the corresponding page (steps s15 to s17).

The tag procedure permits enhanced functionality by allowing subtitle lines to be displayed even if the viewer has not enabled teletext subtitling or has selected a non-transmitted language. For example, on detecting a tag, the instant access software 18 overrides the viewer's preferences, as indicated in Figure 5 by the broken lines, sets subtitling mode (step s20) and language and displays a subtitle line with tagged page number (step s14).

The functionality described above with reference to Figures 4 and 5 can be implemented in hardware, software or a combination of hardware and software. A software implementation means that no changes need to be made to the STB hardware or to the tools used by service providers to create teletext pages and insert them into teletext data streams. In this case, the instant access software can be part of the system software in the STB 8 or it can be provided as downloadable application software.

Although the above description is based on the viewer activating the software using only a single entry on his remote control unit, it is envisaged that more than one keystroke is possible. One situation in which two keystrokes may be appropriate is to avoid accidental key presses on the remote control unit 10, in which case the viewer can be asked to press a second key in response to a screen message such as "Confirm? YES - press 1, NO - press 2".

It will be apparent to the person skilled in the art that any form of notification can be used to inform a viewer that there is additional information relating to a current television programme available on teletext. For example, there may simply be a text message stating that additional information is available, without a specific page number being given. Alternatively, an icon may appear, which the viewer has previously been informed represents the availability of further information.

While the invention has been specifically described in relation to teletext, it is applicable to any type of text based information service used in conjunction with a television system.

## Claims

**1.** Apparatus for accessing an information service from a television programme service, comprising:
means for providing link information for display during the television programme service, the link information being associated with predefined content of the information service;
means for receiving an acceptance signal that is independent of the predefined content from a display controller (10); and
means for providing the predefined content for display in response to the acceptance signal, further comprising:
means (18) for scanning data received from the television program service for link information.

**2.** Apparatus according to claim 1, wherein said link information providing means includes means for inserting the link information into a subtitle line.

**3.** Apparatus according to claim 2, further comprising means (18) for highlighting the link information.

**4.** Apparatus according to any preceding claim, comprising means (18) for distinguishing link information from information which does not comprise a link to the information service.

**5.** Apparatus according to claim 4, wherein said distinguishing means (18) comprises means for detecting a tag associated with the link information.

**6.** Apparatus according to claim 5, further comprising means configured to display the link information in response to the detection of a tag.

**7.** Apparatus according to any preceding claim, wherein the acceptance signal corresponds to a set of keystrokes on the display controller (10).

**8.** Apparatus according to claim 7, wherein the keystroke set comprises less than four keystrokes.

**9.** Apparatus according to claim 8, wherein the keystroke set comprises a single keystroke.

**10.** Apparatus according to any one of the preceding claims, wherein the information service comprises teletext.

**11.** Apparatus according to any one of the preceding claims, wherein the television programme service is broadcast in accordance with the digital video broadcasting (DVB) standard.

**12.** Apparatus according to claim 11, comprising means (16, 17, 18) for processing the DVB service.

**13.** Apparatus according to any preceding claim, comprising means (16, 17, 18) for processing the information service and the link information.

**14.** Apparatus according to any preceding claim comprising means (15) for storing the predefined content of the information service.

**15.** A method of accessing an information service from a television programme service via a television receiver, comprising the steps of:
providing link information associated with predefined content of the information service for display during the television programme service;
receiving an acceptance signal that is independent of the predefined content from a display controller (10);
providing the predefined content for display in response to the acceptance signal; and
scanning data received from the television program service for link information.

**16.** A method according to claim 15, including the step of providing the link information for display as a subtitle during the television programme service.

**17.** A method according to claim 15 or 16, including the step of highlighting the link information to be displayed.

**18.** A method according to claim 17, wherein the highlighting comprises causing the link information to flash periodically when displayed.

**19.** A method according to any one of claims 15 to 18, wherein the link information comprises a page number.

**20.** A method according to any one of claims 15 to 19, wherein the link information includes an identification tag for distinguishing the link information from information which does not comprise a link to the information service.

**21.** A method according to claim 20, wherein the tag comprises a non-display character.

**22.** A method according to claim 20 or 21, comprising displaying a subtitle line which includes tagged link information.

**23.** A method according to any one of claims 15 to 22, wherein the acceptance signal corresponds to a set of keystrokes on the display controller.

**24.** A method according to claim 23, wherein the keystroke set comprises less than four keystrokes.

**25.** A method according to claim 24, wherein the keystroke set comprises a single keystroke.

**26.** A method according to any one of claims 15 to 25, wherein the television programme service is broadcast in accordance with the digital video broadcasting (DVB) standard.

**27.** A program to be executed by a processor to enable access to an information service from a television programme service, in which link information associated with selected predefined content of the information service is displayed concurrently with a television programme image, wherein the program, when executed by the processor, implements the steps of receiving an acceptance signal that is independent of the selected predefined content from a display controller (10), providing the link information for display, providing the selected predefined content for display in response to the acceptance signal and scanning data received from the television program service for link information.

**28.** A program according to claim 27, further implementing the step of providing the link information for display as a subtitle during the television programme service.

**30.** A program including program code for performing the steps of any one of claims 15 to 26 when the program is run by a processor.
